# EUROPÄISCHE PATENTANMELDUNG

(11) **EP 1 215 122 A1**
(43) Veröffentlichungstag der Anmeldung: **19.06.2002**
(21) Anmeldenummer: 01811184.9
(22) Anmeldetag: 05.12.2001
(51) Int. Cl.: B65B 43/52, B65B 59/04

(54) **Fördervorrichtung zum Bilden und Beladen von Gruppen von Behältern**

(30) Priorität: 13.12.2000 CH 24352000
(71) Anmelder: SIG Pack Systems AG, 8222 Beringen (CH)
(72) Erfinder: Ritter, Raimund, 78250 Tengen (DE); Frank, Alexander, 8212 Neuhausen am Rheinfall (CH)
(74) Vertreter: Clerc, Natalia

(57) **Zusammenfassung**

Die Vorrichtung hat zwei Förderelement-Paare (16, 17), die seitlich beabstandet voneinander angeordnet sind. Jedes Paar (16, 17) hat zwei übereinander angeordnete, parallele Förderelemente (18, 19, 20, 21). Alle Förderelemente (18 bis 21) sind über je ein Antriebsrad (22 bis 25) und ein Umlenkrad (26 bis 29) geführt. Es sind z.B. Zahnriemen, von denen lediglich über einen Teil ihrer Länge Mitnehmer (34, 35) mit regelmässiger, einstellbarer Teilung abstehen. Eine erste Antriebseinheit (30, 31) treibt je eines der Antriebsräder (22, 23) jedes Förderelement-Paares (16, 17) synchron miteinander an. Eine zweite Antriebseinheit (32, 33) treibt jeweils die beiden anderen Antriebsräder (24, 25) synchron miteinander an. Eine Steuereinrichtung ist mit den Antriebseinheiten verbunden. Mit der Vorrichtung können Behälter von einer Eingangsstation (4) gruppenweise zu einer Beladestation (8) transportiert werden, in welcher sie positionsgenau bereitgestellt und befüllt werden.

## Beschreibung

Aus der WO 96/41760 ist eine Fördervorrichtung für stückige Produkte bekannt. Sie umfasst zwei parallele endlose Förderketten, welche über separate Motoren angetrieben sind. Von den Förderketten stehen über lediglich einen Teil ihrer Länge Mitnehmer in regelmässigen Abständen ab.

In der US-A-5 937 620 ist eine weitere Fördervorrichtung beschrieben. Sie dient zum Fördern und Befüllen von Schachteln mit einer Gruppe von Dosen. Die Vorrichtung hat zwei in vertikaler Ebene um je ein Antriebsrad und ein Umlenkrad umlaufende, endlose Förderketten, von denen in regelmässigem Abstand Mitnehmer abstehen. Die Mitnehmer schieben die Schachteln vor sich her. In Betrieb sind die beiden Ketten synchron angetrieben. Um die Vorrichtung an andere Schachtellängen anpassen zu können, kann das eine Antriebsrad gegenüber dem andern im Winkel gedreht werden.

Der vorliegenden Erfindung liegt die Aufgabe zugrunde, eine Vorrichtung anzugeben, mit welcher Behälter von einer Eingangsstation gruppenweise zu einer Beladestation transportiert werden können, in welcher sie positionsgenau bereitgestellt und befüllt werden. Diese Aufgabe wird durch die Merkmalskombination der Ansprüche gelöst.

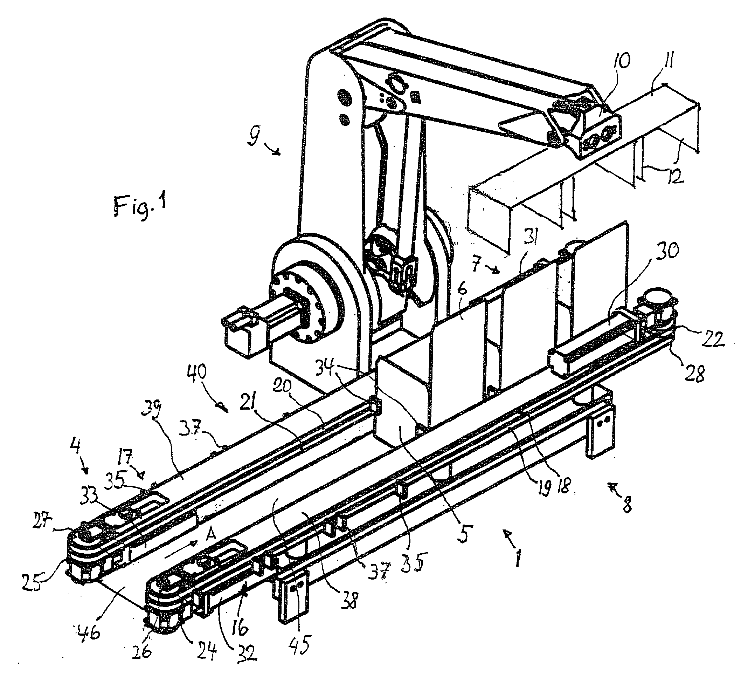

Nachfolgend wird ein Ausführungsbeispiel der Erfindung anhand der Zeichnungen erläutert. Darin zeigt
- Fig. 1: eine perspektivische Ansicht,

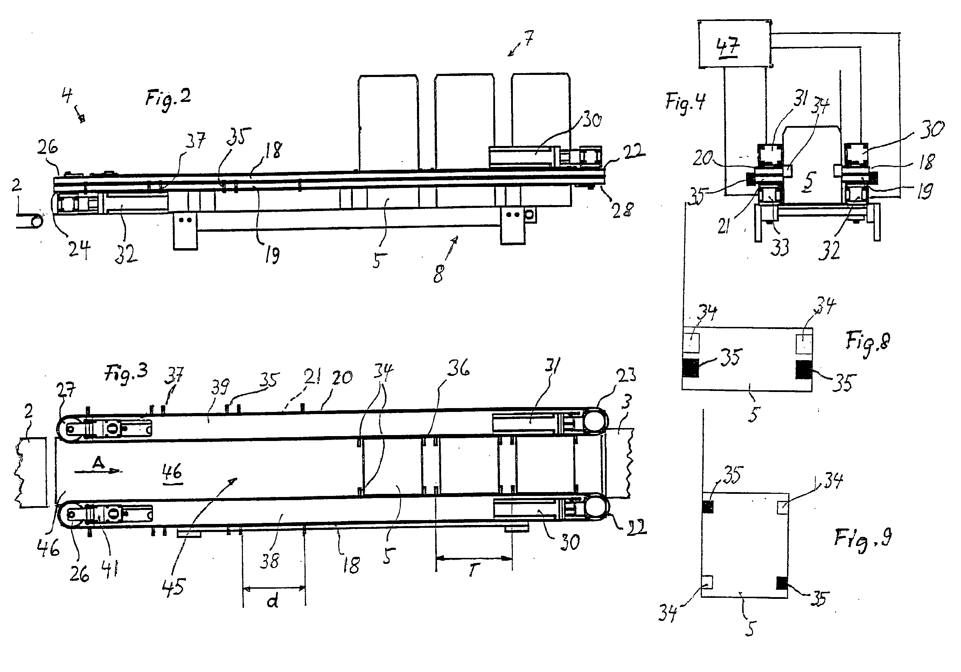

- Fig. 2-4: eine Seitenansicht, Draufsicht und Stirnansicht der Vorrichtung,
- Fig. 5-7: schematische Draufsichten in verschiedenen Betriebsstellungen, und
- Fig. 8+9: zwei unterschiedliche Betriebsarten.

Die Vorrichtung 1 ist zwischen einem Zufuhrförderband 2 und einem Abfuhrförderband 3 angeordnet und hat eine Eingangsstation 4, in welcher leere Schachteln 5 mit geöffnetem Deckel 6 vom Band 2 aufgeschoben werden. Durch die Vorrichtung 1 wird eine Anzahl Schachteln 5 als Gruppe 7 zu einer Beladestation 8 transportiert, in welcher die Schachteln 5 mittels eines Roboters 9 gruppenweise mit Produkten gefüllt werden, z.B. in mehreren Schichten. Am Roboterkopf 10 ist schematisch ein Greifkopf 11 mit drei Greifern 12 zum gleichzeitigen Einfüllen von drei Produkten in die drei Schachteln 5 der Gruppe 7 dargestellt.

Die Fördervorrichtung 1 hat zwei seitlich von einander beabstandete Förderelement-Paare 16, 17. Der seitliche Abstand der Paare 16, 17 voneinander ist einstellbar, um die Vorrichtung 1 an unterschiedliche Schachtelbreiten anpassen zu können. Jedes Paar 16, 17 hat ein oberes 18, 20 und ein dazu paralleles unteres 19, 21 endloses Förderelement, z.B. eine Kette oder einen Zahnriemen. Alle Förderelemente 18 bis 21 laufen um je ein Antriebsrad 22, 23, 24, 25 und je ein Umlenkrad 26, 27, 28, 29 um. Jedes Antriebsrad 22 bis 25 ist durch je einen separaten AC-Servomotor 30, 31, 32, 33 angetrieben. Von jedem Förderelement 18 bis 21 stehen über einen Teil seiner Länge, vorzugsweise über weniger als die Hälfte seiner Länge, Mitnehmer 34, 35 und Gegenhalter 36, 37 seitlich nach aussen ab. Der Abstand der Mitnehmer 34 voneinander, also die Teilung T ist einstellbar, ebenso der Abstand d der Gegenhalter 36, 37 von den Mitnehmern 34, 35, um die Vorrichtung 1 an unterschiedliche Längen der Schachteln 5 anpassen zu können. Die Förderelemente 18 bis 21 können auch als Zahnriemen mit fixen Mitnehmern 34, 35 ausgeführt sein. Bei Änderung der Teilung T und/oder des Abstandes d wird dann der ganze Zahnriemen durch einen anderen mit anderer fixer Teilung T und/oder Abstand d ersetzt.

Je ein Förderelement 18 mit Mitnehmern 34 und Gegenhaltern 36, ein Antriebsrad 22 mit Motor 30 und ein Umlenkrad 26 ist auf einem plattenförmigen Träger 38, 39 montiert und bildet damit eine Baueinheit 40 oder ein Modul. Die Träger 38, 39 dienen zugleich als Führungen für die Förderelemente 18 bis 21 längs der Arbeitsstrecke 45. Die Umlenkräder 26 bis 29 sind auf in Förderrichtung A einstellbaren Spannern 41 montiert, welche ebenfalls Teile der Module 40 sind. Alle Module 40 sind identisch aufgebaut. Dadurch ist jeweils der eine Motor 30 des Förderelement-Paares 16 an einem Ende dieses Paares 16, der andere Motor 32 am gegenüberliegenden Ende des Paares 16 angeordnet. Der eine Motor 30 steht nach oben, der andere nach unten ab. Die Module 40 eines Paares 16 sind achsialsymmetrisch zu einer horizontalen Mittellinie senkrecht zur Förderrichtung A.

Längs der Arbeitsstrecke 45 von der Eingangsstation 4 zur Beladestation 8 gleiten die Schachteln 5 auf einem Gleitboden 46. Der vertikale Abstand des Gleitbodens 46 von den Förderelement-Paaren 16, 17 ist einstellbar, um die Vorrichtung 1 an unterschiedliche Höhen der Behälter 5 anpassen zu können, damit die Mitnehmer 34, 35 und Gegenhalter 36, 37 annähernd auf der Höhe des Schwerpunktes der Schachteln 5 angreifen. Damit können hohe Beschleunigungen und Verzögerungen der Schachteln 5 in Transportrichtung A ohne Kippgefahr erzielt werden. Zum selben Zweck kann auch der vertikale Abstand der Baueinheiten 40 jedes Förderelement-Paares 16, 17 voneinander einstellbar sein, wie dies in Fig. 8 und 9 angedeutet ist. Sämtliche Motoren 30 bis 33 sind mit einer gemeinsamen Steuereinrichtung 47 verbunden.

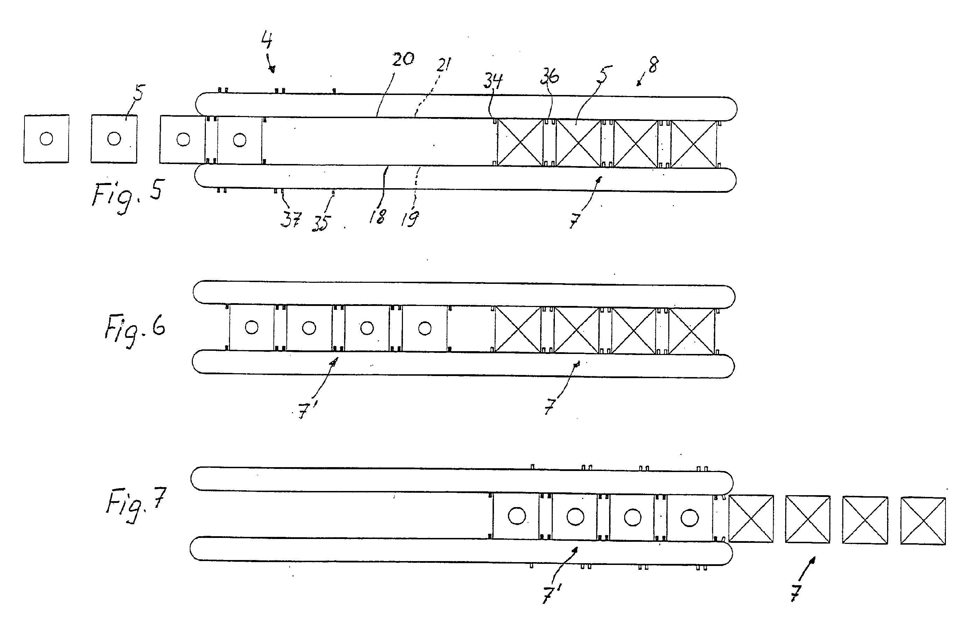

Nachfolgend wird eine mögliche Betriebsweise der Vorrichtung anhand der Darstellung nach Fig. 5 bis 7 beschrieben. Die schwarz ausgefüllten Mitnehmer 35 und Gegenhalter 37 der unteren beiden Förderelemente 19, 21 sind exakt aufeinander ausgerichtet. Die Drehwinkel der Antriebsräder 24, 25 sind also exakt miteinander synchronisiert, was durch die Steuereinrichtung 47 sichergestellt wird. Ebenso sind die nur durch die Umrisse dargestellten Mitnehmer 34 und Gegenhalter 36 der oberen beiden Förderelemente 18, 20 miteinander ausgerichtet. In der Eingangsstation 4 drehen die unteren Antriebsräder 24, 25 kontinuierlich und die Mitnehmer 35 nehmen die vom Band 2 angelieferten leeren Schachteln 5 mit. Gleichzeitig steht die Gruppe 7 von Mitnehmern 34 und Gegenhaltern 36 der oberen Förderelemente 18, 20 in der Beladestation 8 still und die mit ihnen genau positionierten Schachteln 5 der Gruppe 7 werden mit dem Roboter 9 beladen. Sobald die unteren Mitnehmer 36 eine vorbestimmte Anzahl Schachteln 5 erfasst hat (im dargestellten Beispiel 4) beschleunigen die Motoren 32, 33 bis der vorderste Gegenhalter 37 nahe bei der Beladestation 8 anlangt, wo die Motoren 32, 33 stoppen, falls der Beladevorgang noch nicht zu Ende ist. Nach dem Ende des Beladevorgangs schieben die oberen Mitnehmer 34 die gefüllten Schachteln 5 auf das Förderband 3 aus und kehren mit hoher Geschwindigkeit zur Eingangsstation 4 zurück, wo sie wiederum mit kleinerer Geschwindigkeit vom Förderband 2 beschickt werden. Gleichzeitig wird die von den unteren Mitnehmern 35 in der Beladestation 8 exakt positionierte nächste Gruppe 7 beladen.

Die beschriebene Vorrichtung ist sehr flexibel und einfach an unterschiedliche Formate der Schachteln 5 in allen drei Dimensionen anpassbar. In der Beladestation 8 werden die Schachteln 5 durch die Mitnehmer 34, 35 und Gegenhalter 36, 37 sehr exakt positioniert. Zwischen dem Ende des Befüllungsvorgangs und der Bereitstellung einer leeren Schachtelgruppe 7 in der Beladestation 8 verstreicht kaum mehr Zeit als der Roboter 9 ohnehin für das Ergreifen einer neuen Produktegruppe benötigt. Die Einfüllgeschwindigkeit ist deshalb praktisch nur durch die mögliche Taktfrequenz des Roboters 9 beschränkt, was eine hohe Leistung ermöglicht.

Abweichend von der dargestellten Ausführungsform können die jeweils miteinander synchron angetriebenen Antriebsräder 22, 23 bzw. 24, 25 auch über eine Getriebeverbindung miteinander gekoppelt und durch lediglich einen Antriebsmotor angetrieben sein. Die dargestellte Ausführungsform wird jedoch bevorzugt, weil sie flexibler ist und z.B. auch die in Fig. 9 dargestellte Betriebsweise ermöglicht, bei welcher jeweils die Motoren 30 und 33 bzw. 31 und 32 miteinander synchronisiert sind, so dass die zusammenwirkenden Mitnehmer 35 bzw. 34 annähernd auf einer Diagonalen der Schachtel 5 in der Stirnansicht angreifen. Dies kann bei hohen Schachteln 5 von Vorteil sein, damit die Verbindungslinie zwischen zusammenwirkenden Mitnehmern 34 bzw. 35 annähernd eine Gerade schneidet, die parallel zur Förderrichtung A ist und durch den Schwerpunkt der Schachtel 5 geht. Dadurch können sehr hohe Beschleunigungen und Verzögerungen der Schachteln 5 ohne Kippgefahr erreicht werden. Durch den modularen Aufbau werden die Produktionskosten gesenkt. Das Modul 40 kann auch für andere Transportvorrichtungen eingesetzt werden, bei welchen die Mitnehmer 34 über die ganze Länge des Förderelementes 18 verteilt sind. Dadurch können die Produktions-Stückzahlen weiter erhöht und die Kosten gesenkt werden.

## Patentansprüche

1. Fördervorrichtung mit einer Eingabestation (4), in welcher eine Förderstrecke (45) mit Behältern (5) beschickt wird und einer Beladestation (8), in welcher eine Gruppe (7) von Behältern (5) beladen wird, umfassend:
- ein erstes Förderelement-Paar (16) mit einem oberen, ersten Förderelement (18) und einem dazu parallelen unteren zweiten Förderelement (19),
- ein seitlich beabstandetes paralleles zweites Förderelement-Paar (17) mit einem oberen dritten Förderelement (20) und einem dazu parallelen unteren vierten Förderelement (21),
wobei alle Förderelemente (18 bis 21) über je ein Antriebsrad (22 bis 25) und ein Umlenkrad (26 bis 29) umlaufende, endlose, biegsame Zugelemente sind, von denen lediglich über einen Teil ihrer Länge Mitnehmer (34, 35) mit regelmässiger Teilung (T) abstehen,
- eine erste Antriebseinheit (30, 31), welche je eines der Antriebsräder (22, 23) jedes Förderelement-Paares (16, 17) synchron miteinander antreibt,
- eine zweite Antriebseinheit (32, 33), welche je die anderen Antriebsräder (24, 25) der Förderelement-Paare (16, 17) synchron miteinander antreibt, und
- eine Steuereinrichtung (47), die mit den beiden Antriebseinheiten (30, 31; 32, 33) verbunden ist.

2. Vorrichtung nach Anspruch 1, wobei jede Antriebseinheit zwei Motoren (30 bis 33) umfasst, so dass jedes Antriebsrad (22 bis 25) durch einen eigenen Motor angetrieben ist.

3. Vorrichtung nach Anspruch 2, wobei an jedem Förderelement-Paar (16, 17) jeweils der eine Motor (32, 33) im Bereich der Eingangsstation (4) und der andere Motor (30, 31) im Bereich der Beladestation (8) angeordnet ist.

4. Vorrichtung nach Anspruch 3, wobei an jedem Förderelement-Paar (16, 17) der eine Motor(30, 31) oberhalb und der andere Motor (32, 33) unterhalb des Förderelement-Paares (16, 17) angeordnet ist.

5. Vorrichtung nach einem der Ansprüche 1 bis 4, wobei der seitliche Abstand zwischen den beiden Förderelement-Paaren (16, 17) einstellbar ist.

6. Vorrichtung nach einem der Ansprüche 1 bis 5, wobei sie unterhalb der Förderelement-Paare (16, 17) einen Gleitboden (46) aufweist, auf welchem die Behälter (5) geschoben werden, und wobei der vertikale Abstand des Gleitbodens (46) von den Förderelement-Paaren (16, 17) einstellbar ist.

7. Vorrichtung nach einem der Ansprüche 1 bis 6, wobei der vertikale Abstand der beiden Förderelemente (18 bis 21) jedes Förderelement-Paares (16, 17) von einander einstellbar ist.

8. Förderelement-Paar zur Verwendung in einer Fördervorrichtung gemäss einem der Ansprüche 1 bis 7, umfassend ein erstes Förderelement (18) und ein parallel dazu umlaufendes zweites Förderelement (19), wobei beide Förderelemente, (18, 19) über je ein Antriebsrad (22, 24) und ein Umlenkrad (26, 28) umlaufende, biegsame, endlose Zugelemente sind, von denen lediglich über einen Teil ihrer Länge Mitnehmer (34, 35) mit regelmässiger Teilung (T) abstehen, und wobei beide Antriebsräder (22, 24) mit je einem Motor (30, 32) verbunden sind, **dadurch gekennzeichnet, dass** die beiden Antriebsräder (22, 24) an gegenüberliegenden Enden des Förderelement-Paares (16) angeordnet sind, dass die beiden Motoren (30, 32) auf entgegengesetzten Seiten des Förderelement-Paares (16) angeordnet sind, und dass die beiden Einheiten gebildet aus je einem Förderelement (18, 19), einem Umlenkrad (26, 28), einem Antriebsrad (22, 24) und einem damit verbundenen Motor (30, 32) als identische Module (40) ausgebildet sind.

9. Förderelement-Paar nach Anspruch 8, wobei jedes Modul (40) auf einem separaten Träger (38) montiert ist, und wobei vorzugsweise der Abstand der Träger (38) voneinander einstellbar ist.

10. Förderelement-Paar nach Anspruch 8 oder 9, wobei jedem Mitnehmer (34, 35) ein Gegenhalter (36, 37) zugeordnet ist, dessen Abstand vom zugehörigen Mitnehmer (34, 35) unabhängig von der Teilung (T) einstellbar ist.
